# EUROPÄISCHE PATENTSCHRIFT

(11) **EP 0 693 855 B1**
(45) Veröffentlichungstag und Bekanntmachung des Hinweises auf die Patenterteilung: **07.03.2001**
(21) Anmeldenummer: 95110893.5
(22) Anmeldetag: 12.07.1995
(51) Int. Cl.: H04N 7/087, H04N 7/088

(54) **Verfahren zur Anforderung von Teletextseiten**
Method of requesting teletext pages
Méthode d'obtention de pages de télétexte

(30) Priorität: 21.07.1994 DE 4425687
(43) Veröffentlichungstag der Anmeldung: 24.01.1996
(73) Patentinhaber: DEUTSCHE THOMSON-BRANDT GMBH, 78048 Villingen-Schwenningen (DE)
(72) Erfinder: Gyarmati, Sandor, D-78052 Villingen-Schwenningen (DE); Blawat, Meinolf, D-30161 Hannover (DE); Seegert, Bernhard, D-78052 Villingen (DE)

(56) Entgegenhaltungen:
- EP-A- 0 525 559
- EP-A- 0 567 185
- EP-A- 0 648 054
- WO-A-91/00670
- WO-A-91/05436
- DE-A- 4 201 031

## Beschreibung

Die Erfindung geht aus von einem Verfahren zur Anforderung von Seiten bei Teletext gemäß dem Oberbegriff des Anspruchs 1.

Es ist bekannt die Bedienerführung bei Teletext durch die Systeme FloF, Top durch Zifferneingabe oder das Auf- und Abblättern der Teletextseiten durch das Drücken der Funktionstasten "+/-" durchzuführen. Nachteilig hierbei ist, daß bei Eingabe der Seitennummern die Nummer der gewünschten Seite bekannt sein muß, daß beim FloF-System eine vorgegebene Baumstruktur verwendet wird und beim Top-System nur anhand der Begriffe für Blöcke und Untergruppen eine Orientierung gegeben ist. Das mühsame Herumblättern in den Teletextseiten bleibt jedoch bestehen.

Alle Seitenanforderungsmethoden (Seitennummer, Seite "+/-", Fl-oF, Top) sind Seitenummern orientiert d.h. der Acquisitionskreis des jeweiligen Decoders wird mit manuell eingegeben vom Sender vorgeschlagenen Top/FloF-Seitennummern, oder vom Benutzer eingegebene Seitennummern gespeist. Die einlaufenden Seitennummern werden dann mit den programmierten Seitennummern verglichen und bei Übereinstimmung die volle Seite eingelesen.

Aus der EP-A-0 567 185 ist ein Verfahren zum Anfordern von Teletextseiten bekannt, bei dem die eintreffenden Teletextseiten nach einem Suchbegriff durchsucht werden. Hierfür wird die jeweils aktuell eintreffende Teletextseite einem Schieberegister zugeführt und durch einen Vergleicher mit dem gewünschten Suchbegriff in einem weiteren Register verglichen. Die Teletextseiten mit den gesuchten Suchbegriffen oder ihre Seitennummern werden hierbei für eine spätere Anzeige oder Auswahl gespeichert.

Der Erfindung liegt die Aufgabe zugrunde, ein einfaches Verfahren zum Anfordern von Teletextseiten zu schaffen. Diese Aufgabe wird durch die im Anspruch 1 angegebenen Merkmale der Erfindung gelöst. Vorteilhafte Weiterbildungen der Erfindung sind in den Unteransprüchen angegeben.

Bei dem erfindungsgemäßen Verfahren zur Anforderung von Teletextseiten, geschieht die Anforderung durch das Eingeben eines Suchbegriffes.

Dieser Suchbegriff kann sowohl aus Buchstaben als auch aus Zahlen zusammengesetzt sein.

Die vom Teletextdecoder empfangenen Seiten laufen alle in einen Schiebespeicher. Sobald eine Seite ganz eingelesen ist, wird der Suchbegriff mit dem Inhalt der Teletextseite im Schiebespeicher verglichen. Wird der Suchbegriff in der Teletextseite gefunden, wird diese Seite auf dem Bildschirm angezeigt. Vorteilhaft bei diesem Verfahren ist, daß eine bestimmte unbekannte Seite sofort ohne Zwischenschritt aus dem gesamten Teletextzyklus unmittelbar angezeigt werden kann. Der Bedienende braucht weder die Seitennummer noch Informationen über die Bedienung des entsprechenden Teletextsystemes zu haben. Mit diesem Verfahren wird das Bedienen auch durch einen nicht sachkundigen Bedienenden sehr vereinfacht. Auch ist es möglich mehrere Suchbegriffe einzugeben die mit "und" oder "oder" oder "und oder oder" zu verknüpfen sind, damit eine Einschränkung in der Suche der Teletextseiten ermöglicht wird.

Zu einzelnen oder konditional verknüpften Suchworten können aber auch freivereinbarende Bereiche festgelegt werden. Diese Bereiche können, nachdem das Suchwort gefunden wurde nach frei wählbaren Kriterien ausgewertet werden und gegebenenfalls kann danach die Seite und/oder das Suchwort und/oder es können die spezifischen Bereiche angezeigt werden.

Die Eingabe des Suchbegriffes kann über verschiedene Wege erfolgen.
a) über eine alphanumerische Tastatur, diese wäre insbesondere vorteilhaft wenn BTX mit Videotext kombiniert wird.
b) über eine vom Benutzer programmierbare Suchbegriffseite, in der es möglich ist, einen einmal eingegebenen Suchbegriff durch das Auf- und Abbewegen eines Cursors aus- und anzuwählen.
c) Mit Hilfe einer Software, die es ermöglicht, aus einer bereits auf dem Bildschirm angezeigten Teletextseite einen Suchbegriff anzuwählen. Zum Beispiel mit Hilfe eines Cursors der diesen Suchbegriff markiert, so daß auch hier das erneute Eingeben nicht mehr erfolgen muß.

Nach Auffinden des gesuchten Suchbegriffes, entweder in einer Seite im Speicher oder in einer aktuell eintreffenden Seite, wird die betreffende Seite angezeigt. Das gesuchte Wort ist vorzugsweise farbig hinterlegt oder anderweitig gekennzeichnet. Danach besteht die Möglichkeit die nächste Seite mit demselben Suchbegriff anzufordern, welche in der Zeit wo eine Seite angezeigt wird schon gesucht wird.

Die Erfindung wird im folgenden anhand der Zeichnung erläutert. Darin zeigen
- Fig. 1: einen erfindungsgemäßen Schaltungsaufbau,
- Fig. 2: die Darstellung der Acquisation und
- Fig. 3: die Darstellung der Bilddarstellung.

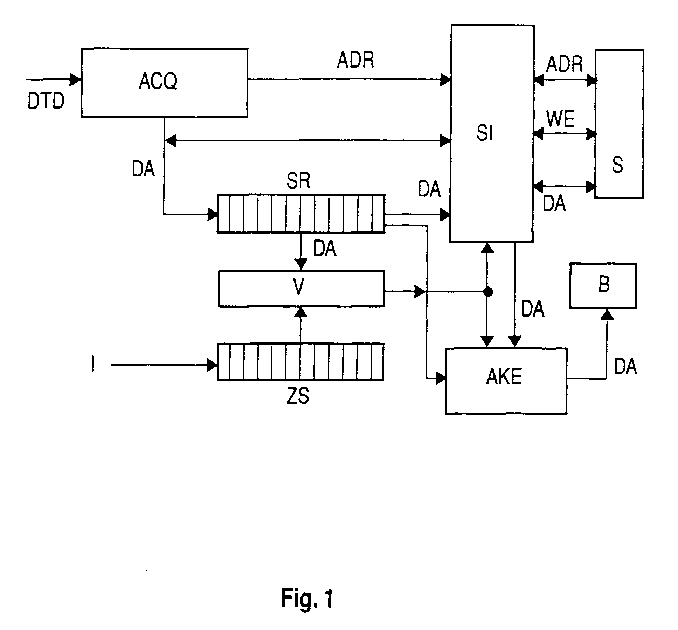

Fig. 1 zeigt die Acquisitionseinheit ACQ mit den eingehenden Daten des Teletextdecoders DTD, einem Datenausgang und einem Adressausgang. Die Daten gelangen über Datenleitungen DA in ein Schieberegister SR, welches zwei Datenausgänge aufweist. Diese Datenausgänge sind mit einen Vergleicher V und ein Speicherinterface SI durch Datenleitungen DA verbunden . Der Adressausgang der Acquisition ACQ ist mit einer Adressleitung ADR mit dem Speicherinterface SI verbunden. Das Speicherinterface SI gibt die Adresse über eine Adressleitung ADR, die Daten über Datenleitungen DA und das Signal über die Leitung WE an den Speicher S weiter. Der Zeichenspeicher ZS ist mit dem Vergleicher V verbunden und empfängt ein Signal vom I²C Bus I. Der Vergleicher V ist verbunden mit dem Speicherinterface SI und einer Anzeigenkontrolleinheit AKE. Die Anzeigenkontrolleinheit AKE ist mit der Bildschirmeinheit B und dem Speicherinterface durch Datenleitungen DA verbunden.

Der Benutzer gibt einen Suchbegriff per Fernbedienung ein. Dieser Suchbegriff wird im Zeichenspeicher ZS gespeichert. Die Acquisitionseinheit ACQ empfängt die Daten des Teletextdecoders DTD. Diese Daten werden in das Schieberegister SR übergeben. Der Vergleicher V vergleicht nun die Daten des Zeichenspeichers ZS und die Daten des Schieberegisters SR. Ist die entsprechende Seite vorhanden, gibt der Vergleicher an die Anzeigekontrolleinheit AKE und an das Speicherinterface SI die Information weiter, daß eine Seite mit dem Suchbegriff vorhanden ist. Das Schieberegister SR gibt dann die Daten an das Speicherinterface SI weiter. Das Speicherinterface SI gibt die Daten in den Speicher und an die Anzeigekontrolleinheit AKE weiter. Aus der Anzeigekontrolleinheit AKE werden die Daten dann auf dem Bildschirm angezeigt. Wenn keine Teletextseite gefunden wurde, wird dieses auf dem Bildschirm angezeigt.

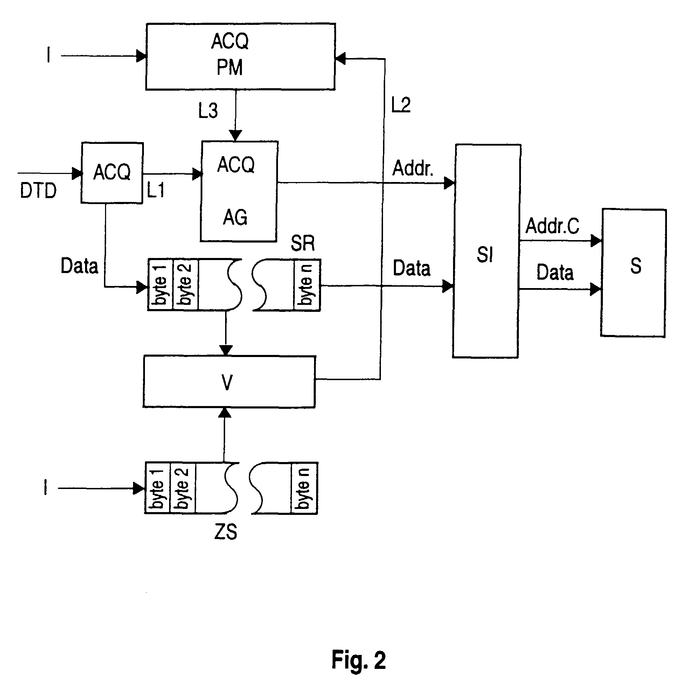

Fig. 2 zeigt ein Blockschaltbild zum Einlesen der Daten. Das Signal vom I²C Bus I wird dem Acquisationsseitenorganisator ACQPM und dem Zeichenspeicher ZS zugeführt. Der Teletextdecoder DTD gibt das Signal zur Acquisation ACQ. Von der Acquisation ACQ gelangen die Daten in ein Schieberegister SR und über die Leitung L1 in Auquisationsadressengenerator ACQAG. Der Adressengenerator ACQAG erhält weiterhin ein Signal über die Leitung L3 von dem Acquisationseitenorganisator ACQPM. Der Acquisationsadressengenerator ACQAG gibt die so erstellte Adresse Addr an das Speicherinterface SI weiter. Das Speicherinterface SI bekommt über die Leitung Data Informationen vom Schieberregister SR. Das Speicherinterface SI gibt über die Leitungung Address control AddrC und über die Leitung Data die Informationen zum Speicher S weiter. Fordert der Benutzer eine Zeichenfolge an, so wird diese im Zeichenspeicher Zs abgespeichert und der Vergleicher V vergleicht den Inhalt des Schieberegisters SR mit dem Zeichenspeicher Zs. Wenn eine Seite mit dem entsprechenden Begriff gefunden wurde wird diese Information über die Leitung L2 an den Acquisationsseitenorganisator ACQPM weiter gegeben. Diese Einheit gibt über die Leitung L3 die Information an den Acquisationadressengenerator ACQAG und die Informationen werden mit der Adresse über die Leitung Addr und die Leitung Data im Speicherinterface SI und anschließend im Speicher S abgelegt.

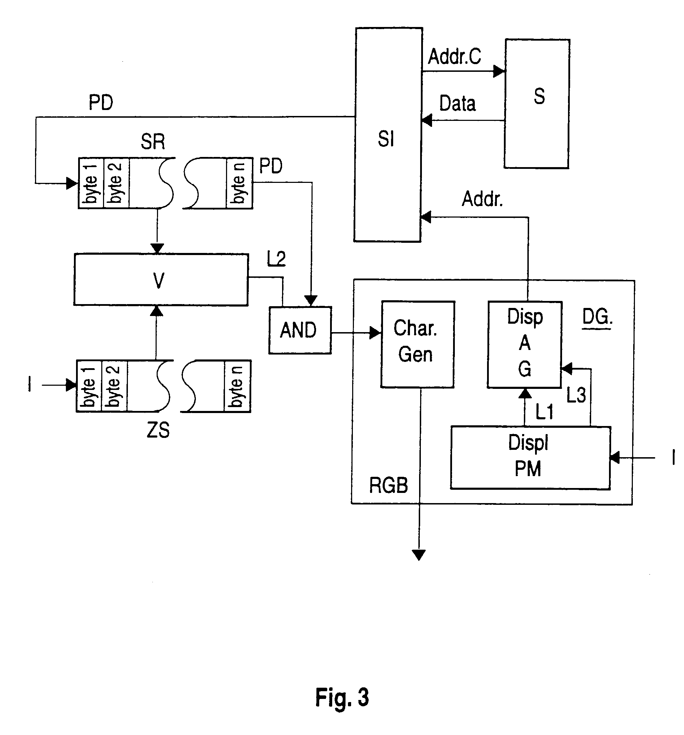

Fig. 3 zeigt ein Blockschaltbild zum Darstellen der Daten. Der Displaygenerator DG beinhaltet den Zeichengenerator CharGEN mit einem RGB-Ausgang, ein Displayadressengenerator DispAG und ein Displayseitenorganisator DisplPM mit einem Ausgang L1 und einem Ausgang für die Speichernummer L3 und einem Eingang vom I²C Bus I. Der Displayadressengenerator DispAG gibt über die Adressenleitung Addr die Adressen an das Speicherinterface I weiter. Das Speicherinterface SI gibt die Seitendaten PD an das Schieberegister SR weiter. Der Vergleicher V vergleicht die Seiten des Schieberegisters SR mit dem Zeichenspeicher ZS und gibt über den Ausgang L2 die Information über ein gleiches Zeichen in einer Seite an ein UND Glied AND. Das UND Glied AND erhält weiterhin die Seitendaten PD und gibt diese an den Zeichengenerator CharGEN weiter. Die Daten können so dargestellt werden. Das Speicherinterface SI bekommt seine Daten vom Speicher S, nachdem diese über die Adresskontrolleitung AddrC angefordert wurden.

Bei einer Weiterbildung der Erfindung gibt der Benutzer seinen Suchbegriff ein und das Teletextsystem durchsucht verschiedene Programme nach diesem Suchbegriff. Auf diese Weise ist es möglich, einen gewünschten Film auf lange Sicht suchen zu lassen und bei erfolgreicher Suche, auch nach längere Zeitraum, wird dem Benutzer das Ergebnis der Suche mitgeteilt. In einem vorher wählbaren Rhytmus, ist es möglich, eine Ergebnisausgabe herbeizuführen die entweder das Ergebnis anzeigt oder dem Benutzer die Mitteilung bringt, daß die Suche z.Zt. nicht erfolgreich war.

Bei einer nächsten Weiterbildung der Erfindung wird der Suchbegriff über eine LCD Touch/Screen-Tastatur eingegeben und steht nun als Suchbegriff zur Verfügung.

Weiterhin ist es möglich die Suchbegriffe, die auf wie zuvor erläutert eingegeben werden können, bestehen zu lassen, d.h. täglich wird dem Benutzer z.B. die Informationen des Wetters, einer Rubrik Spielfilm und z.B. die Filme mit Darsteller Heinz Rühmann herausgesucht. Mit dieser Weiterbildung ist es möglich sich ein individuellen Angebot aus den Teletextseiten heraussuchen zu lassen. Dem Benutzer wir auf diese Art und Weise ermöglicht, jeden Tag seine individuell zusammengestellte Teletextinformationen rasch anzuzeigen.

Es ist auch möglich für verschiedene Teilnehmer unterschiedliche Suchkriterien einzugeben und sich diese individuell anzeigen zu lassen. Auf diese Weise ist es möglich verschieden Suchen durchführen zu lassen. Einerseits nach einem bestimmten Kinderfilm, andererseits nach einem bestimmten Roman oder nach bestimmten Sportsendungen. Die Suche wird im Normalbetrieb auf einem Kanal beschränkt, es sei denn es werden mehrere Tuner verwendet, im Standby-Betrieb können alle Kanäle besucht werden. Vorzugsweise kann das Suchergebnis auf einer neugenerierten Videotextseite nach Datum, Zeit und Programmplatz aufgelistet werden.

## Patentansprüche

1. Verfahren zum Auffinden von in Teletext seiten angeordneten Daten, die in der Bildaustastlücke eines oder mehrerer Fernsehkanäle übertragen werden, wobei wenigstens ein Teil der Teletext seiten abgespeichert wird, wobei ein oder mehrere Suchbegriffe vorgegeben werden, nach denen die Teletext seiten durchsucht werden, und wobei die Teletext seiten, die den Suchbegriff enthalten, angezeigt werden, **dadurch gekennzeichnet**, daß zunächst die abgespeicherten Teletext seiten nach den Suchbegriffen durchsucht werden und anschließend die jeweils aktuell eintreffende Teletext seite nach den Suchbegriffen durchsucht wird.

2. Verfahren nach Anspruch 1, wobei der Suchbegriff zwischengespeichert wird.

3. Verfahren nach Anspruch 1 oder 2, wobei der Suchbegriff mit den in Teletext seiten angeordneten Daten verglichen wird und das Ergebnis des Vergleichs auf einem Bildschirm dargestellt wird.

4. Verfahren nach einem der vorhergehenden Ansprüche, wobei der Suchbegriff in mehreren Fernsehkanälen über einen längeren Zeitraum gesucht wird.

5. Verfahren nach einem der vorhergehenden Ansprüche, wobei frei vereinbarte Suchbereiche festgelegt werden, in denen nach den Suchbegriffen gesucht wird.

6. Verfahren nach einem der vorhergehenden Ansprüche, wobei mit Hilfe einer Cursorsteuerung ein Suchbegriff aus einer bereits auf einem Bildschirm angezeigten Teletextseite markierbar und auswählbar ist.

7. Verfahren nach Anspruch 6, wobei die vom Benutzer eingegebenen Suchbegriffe abgespeichert werden und die abgespeicherten Suchbegriffe anzeigbar und mit Hilfe der Cursorsteuerung auswählbar sind.

8. Vorrichtung mit Mitteln zur Durchführung aller Schritte des Verfahrens nach Anspruch 1.

## Claims

1. Method of finding data arranged in teletext pages, at least some of the teletext pages being stored, one or more search terms for which the teletext pages are searched being prescribed, and the teletext pages which contain the search term being displayed, **characterized** in that firstly the stored teletext pages are searched for the search terms and then the respective presently incoming teletext page is searched for the search terms.

2. Method according to Claim 1, in which the search term is buffer-stored.

3. Method according to Claim 1 or 2, in which the search term is compared with the data arranged in teletext pages, and the result of the comparison is presented on a screen.

4. Method according to one of the preceding claims, in which the search term is sought in a plurality of television channels over a relatively long period of time.

5. Method according to one of the preceding claims, in which freely agreed search areas in which the search terms are sought are defined.

6. Method according to one of the preceding claims, in which, with the aid of a cursor control, a search term can be marked and can be selected from a teletext page that is already displayed on a screen.

7. Method according to Claim 6, in which the search term input by the user are stored and the stored search terms can be displayed and can be selected with the aid of the cursor control.

8. Apparatus having means for carrying out all the steps of the method according to Claim 1.

## Revendications

1. Procédé de recherche de données placées dans des pages Télétexte, où au moins une partie des pages Télétexte est mémorisée, où un ou plusieurs critères de recherche sont prédéfinis pour permettre d'effectuer une recherche sur les pages Télétexte et où les pages Télétexte contenant le critère de recherche s'affichent, **caractérisé en ce que** la recherche s'effectue d'abord sur les pages Télétexte mémorisées, en fonction des critères de recherche, puis les autres pages Télétexte.

2. Procédé conforme à la revendication 1, où le critère de recherche est placé en mémoire tampon.

3. Procédé conforme à la revendication 1 ou 2, où le critère de recherche est comparé aux données placées dans les pages Télétexte et où le résultat de la comparaison est affiché sur un écran.

4. Procédé conforme à l'une des revendications précédentes, où le critère est recherché sur plusieurs canaux de télévision sur une période supérieure.

5. Procédé conforme à l'une des revendications précédentes, où les champs de recherche sont spécifiés librement pour y effectuer une recherche en fonction de critères de recherche.

6. Procédé conforme à l'une des revendications précédentes, où une commande de curseur permet de sélectionner un critère de recherche à partir d'une page Télétexte déjà affichée sur un écran.

7. Procédé conforme à la revendication 6, où les critères de recherche entrés par l'utilisateur sont mémorisés et où les critères de recherche mémorisés peuvent être affichés et sélectionnés grâce à la commande de curseur.

8. Appareil présentant des dispositifs permettant de réaliser toutes les étapes du procédé conforme à la revendication 1.
